# EUROPÄISCHE PATENTSCHRIFT

(11) **EP 2 576 131 B1**
(45) Veröffentlichungstag und Bekanntmachung des Hinweises auf die Patenterteilung: **21.10.2015**
(21) Anmeldenummer: 11721036.9
(22) Anmeldetag: 23.05.2011
(51) Int. Cl.: B23Q 1/54, B23Q 11/00, B23C 3/05

(54) **WERKZEUGMASCHINE FÜR DREHBEARBEITUNG**
MACHINE TOOL FOR TURNING
MACHINE OUTIL DE TOURNAGE

(30) Priorität: 25.05.2010 DE 102010029288
(43) Veröffentlichungstag der Anmeldung: 10.04.2013
(73) Patentinhaber: Komet Group GmbH, 74354 Besigheim (DE); Machines Serdi S.A., 74012 Annecy Cedex (FR)
(72) Erfinder: FRONIUS, Jürgen, 74399 Walheim/Neckar (DE); SOQUET, Michel, F-74330 Choisy (FR); MUGNIER, Rémi, F-74600 Seynod (FR); BRAUN, Karl-Heinz, 74394 Hessigheim (DE)
(74) Vertreter: Gauss, Nikolai
(86) Internationale Anmeldenummer: PCT/EP2011/058345
(87) Internationale Veröffentlichungsnummer: WO 2011/147770

(56) Entgegenhaltungen:
- EP-A1- 1 314 501
- WO-A1-96/07501
- DE-A1- 2 808 610
- FR-A1- 2 735 409

## Beschreibung

Die Erfindung betrifft eine Werkzeugmaschine für Drehbearbeitung, insbesondere für die Bearbeitung von Ventilsitzen an Zylinderköpfen, mit einer Mechatronikbaugruppe, die eine Maschinenspindel aufweist, mit einem an der Maschinenspindel aufgenommenen Werkzeugkopf, der einen Grundkörper sowie mindestens einen relativ zu dem Grundkörper verstellbaren Arbeitsschieber für die Aufnahme eines Werkzeugs hat, mit einem auf den Arbeitsschieber einwirkenden elektrischen Verstellmotor und mit einer die Mechatronikbaugruppe aufnehmenden Trägereinrichtung.

Darüber hinaus betrifft die Erfindung eine Mechatronikbaugruppe zur Aufnahme mit einer eine Gelenkanordnung umfassenden Trägereinrichtung in einer Werkzeugmaschine, mit einer Maschinenspindel, mit einem an der Maschinenspindel aufgenommenen Werkzeugkopf, der einen Grundkörper sowie mindestens einen relativ zu dem Grundkörper verstellbaren Arbeitsschieber für die Aufnahme eines Werkzeugs aufweist, und mit einem auf den Arbeitsschieber einwirkenden elektrischen Verstellmotor mit einem Rotor, sowie die Verwendung einer solchen Mechatronikbaugruppe in einer Werkzeugmaschine.

Eine derartige Werkzeugmaschine mit einer derartigen Mechatronikbaugruppe ist aus der FR 2 832 658 A1 bekannt. Die Mechatronikbaugruppe dieser Werkzeugmaschine ist an einer Trägereinrichtung aufgenommen. Die Mechatronikbaugruppe enthält einen Werkzeugkopf. Der Werkzeugkopf ist an eine Maschinenspindel mit Drehachse angeschlossen. Der Werkzeugkopf ist mit einem Führungsdorn ausgebildet. Der Werkzeugkopf hat eine verstellbare Aufnahmeeinheit, an der ein Schneidwerkzeug festgelegt ist. Für das Verstellen der Aufnahmeeinheit enthält die Mechatronikbaugruppe einen Verstellmotor. In Bezug auf die Drehachse der Maschinenspindel ist der Verstellmotor in der Mechatronikbaugruppe seitlich versetzt am werkzeugkopfseitigen Ende der Maschinenspindel angeordnet. Der Verstellmotor und die Aufnahmeeinheit für das Schneidwerkzeug sind durch ein Planetengetriebe gekoppelt. Für das Bearbeiten von Ventilsitzen wird der Führungszapfen des Werkzeugkopfes in eine Ventilbohrung eingeführt. Darauf wird der Werkzeugkopf durch Antreiben der Maschinenspindel in Rotationsbewegung versetzt. Das Schneidwerkzeug rotiert dann um die Drehachse der Maschinenspindel. Die Anordnung des Verstellmotors hat zur Folge, dass bei der Werkzeugmaschine der Masseschwerpunkt der Mechatronikbaugruppe nahe dem Werkzeugkopf der Anordnung liegt. Für das Einstellen der Mechatronikbaugruppe in der Werkzeugmaschine sind deshalb hohe Kraftmomente erforderlich. Darüber hinaus hat die in Bezug auf die Drehachse der Maschinenspindel seitliche Anordnung des Verstellmotors einen asymmetrischen Wärmeeintrag in den Werkzeugkopf zur Folge. Dies führt zu Ungenauigkeiten bei der Werkzeugeinstellung.

Ausgehend hiervon liegt der Erfindung die Aufgabe zugrunde, eine Werkzeügmaschine mit Mechatronikbaugruppe sowie eine Mechatronikbaugruppe insbesondere für das Nachbearbeiten von Ventilsitzen an Zylinderköpfen bereitzustellen, und eine Verwendung der Mechatronikbaugruppe in einer Werkzeugmaschine anzugeben, die ein Einstellen der Mechatronikbaugruppe mit geringem Kraftaufwand ermöglichen und die sehr hohe Bearbeitungsgenauigkeiten gewährleisten.

Diese Aufgabe wird mit einer Werkzeugmaschine mit den Merkmalen des Anspruchs 1 und mit einer Mechatronikbaugruppe mit den Merkmalen des Anspruchs 23 sowie der Verwendung einer Mechatronikbaugruppe mit den Merkmalen des Anspruchs 24 gelöst. Eine erfindungsgemäße Werkzeugmaschine enthält eine Trägereinrichtung mit einer Gelenkanordnung, an der die Mechatronikbaugruppe wenigstens um eine erste Achse und um eine von der ersten Achse verschiedene zweite Achse geschwenkt werden kann, wobei der Verstellmotor in der Mechatronikbaugruppe derart positioniert ist, dass die Gewichtskraft F_{V} des Verstellmotors wenigstens teilweise jenes Drehmoment kompensiert, das die Gewichtskraft F_{G} des Werkzeugkopfes bei einem Verschwenken der Mechatronikbaugruppe um die erste Achse und/oder die zweite Achse hervorruft.

Ein Grundgedanke der Erfindung besteht darin, eine Mechatronikbaugruppe mit einem verlagerbaren Schneidwerkzeug in einer Gelenkanordnung in einer Werkzeugmaschine so aufzunehmen, dass sich der Masseschwerpunkt der Mechatronikbaugruppe nahe bei oder auf einer Drehachse der Gelenkanordnung befindet. Ein weiterer Grundgedanke der Erfindung ist, den Verstellmotor für einen Arbeitsschieber in der Mechatronikbaugruppe mit Abstand vom Werkzeugkopf anzuordnen, damit ein unerwünschter Wärmeeintrag von dem Verstellmotor in den Werkzeugkopf vermieden wird.

Von Vorteil ist es, wenn die Mechatronikbaugruppe einen die Maschinenspindel antreibenden elektrischen Spindelmotor aufweist, der einen mit der Maschinenspindel drehgekoppelten Rotor umfasst. Die Maschinenspindel kann eine Hohlwellengeometrie haben. Der Verstellmotor hat dann günstigerweise einen auf den Arbeitsschieber einwirkenden Rotor, wobei die Rotordrehachse des Spindelmotors und die Rotordrehachse des Verstellmotors mit der Drehachse der Maschinenspindel fluchten.

Von Vorteil ist es auch, wenn die Maschinenspindel mit wenigstens einem ersten Drehlager und einem zweiten Drehlager in einem mit dem Stator des Spindelmotors drehfest verbundenen, vorzugsweise als Pinole ausgebildeten Gehäuse gelagert ist, wobei der Spindelmotor zwischen dem ersten Drehlager und dem zweiten Drehlager auf die Maschinenspindel einwirkt.

Für das Verlagern der Mechatronikbaugruppe in Richtung der Drehachse der Maschinenspindel hat das Gehäuse einen vorzugsweise als Zahnstange ausgebildeten Wirkabschnitt. An dem Gehäuse ist für das Übertragen von Energie und Daten eine Primärspule festgelegt, die mit einer an der Aufnahme positionierten Sekundärspule eine induktive Übertragungsstrecke für Energie und Daten bildet.

Indem der Verstellmotor auf der dem Werkzeugkopf abgewandten Seite des Spindelmotors angeordnet ist, lässt sich erreichen, dass der Masseschwerpunkt der Mechatronikbaugruppe im Bereich der Gelenkanordnung liegt.

Es ist günstig, die Maschinenspindel als Hohlspindel auszubilden, durch die eine mit dem Rotor des Verstellmotors drehgekoppelte Antriebswelle zur Bewegungskopplung von Arbeitsschieber und Verstellmotor hindurchgreift. Damit lassen sich über die Maschinenspindel hohe Drehmomente bei geringem Eigengewicht übertragen.

In Weiterbildung der Erfindung wirkt der Verstellmotor auf den Arbeitsschieber über mit der Antriebswelle verbundene Getriebemittel in Verstellrichtung ein. Die Getriebemittel können z.B. ein im Werkzeugkopf angeordnetes Umsetzungsgetriebe umfassen, das eine Drehbewegung der Antriebswelle in eine Linearbewegung des Arbeitsschiebers umwandelt. Insbesondere können die Getriebemittel ein die Drehbewegung des Rotors des Verstellmotors umsetzendes, vorzugsweise als Planetengetriebe oder Hamonic Drive ausgebildetes Untersetzungsgetriebe umfassen. Dieses Untersetzungsgetriebe kann auch im Werkzeugkopf angeordnet sein. Es ist jedoch auch möglich, das Untersetzungsgetriebe zwischen dem Verstellmotor und der Antriebswelle zu positionieren.

Günstig ist es, den Stator des Verstellmotors relativ zur Maschinenspindel stationär anzuordnen.

Indem in der als Hohlspindel ausgebildeten Maschinenspindel eine fensterförmig ausgebildete Durchbrechung für einen Funktionskanal vorgesehen wird, können elektrische Leitungen und Flüssigkeitsleitungen zu dem Werkzeugkopf geführt werden.

Von Vorteil ist es, den Verstellmotor an einer an der Maschinenspindel befestigten Aufnahme anzuordnen, die eine Drehdurchführung für einen Funktionskanal aufweist, welche in einem vorzugsweise in einer Wandung oder Aussparung der Aufnahme verlaufenden Funktionskanal mündet. Bevorzugt hat die Mechatronikbaugruppe mindestens einen Funktionskanal für Fluid, insbesondere einen Funktionskanal für Kühlschmierstoff und/oder einen Funktionskanal für elektrische Leitungen zur Energie- und/oder Datenübertragung in den Werkzeugkopf. Dieser Funktionskanal kann z.B. als eine in der Mechatronikbaugruppe ortsfest montierte Rohrleitung oder Schlauchleitung ausgebildet sein, die mit der Maschinenspindel bewegt wird. Von Vorteil ist insbesondere eine elektrische Leitung für das Übertragen einer Werkzeugposition in den Werkzeugkopf. Von Vorteil ist es, wenn der Funktionskanal Kupplungselemente für das Verbinden von Funktionskanalabschnitten aufweist. Diese Maßnahme ermöglicht einen modularen Aufbau der Mechatronikbaugruppe und einen einfachen Austausch von Verschleißteilen.

Auch die Antriebswelle kann mit mindestens einem Funktionskanal für Fluid, insbesondere einem Funktionskanal für Kühlschmierstoff und/oder mit elektrischen Leitungen zur Energie- und Datenübertragung ausgebildet werden. Um Trägheitsmomente und Gewicht zu vermindern, ist es günstig, die Antriebswelle als Hohlwelle zu gestalten.

Günstigerweise ist die Gelenkanordnung als Kugelgelenk mit einem Kugelzentrum ausgebildet, um das die Mechatronikbaugruppe geschwenkt werden kann. Der Masseschwerpunkt des Verstellmotors in der Mechatronikbaugruppe ist dann auf einer dem Werkzeugkopf abgewandten Seite des Kugelzentrums angeordnet. Indem dieses Kugelgelenk einen Gelenkkörper hat, der in einem Luftlager, einem hydrostatischen Lager oder einem magnetischen Lager aufgenommen ist, lässt sich die Mechatronikbaugruppe ohne Kraftaufwand oder mit lediglich sehr geringem Kraftaufwand präzise bewegen. Bevorzugt ist die Gelenkanordnung in der Werkzeugmaschine ein Kugelgelenk mit Luftkissen, das sich für Selbstausrichtung eignet, wie es z. B. in der EP 0 833 711 B1 beschrieben ist. Bei der Werkzeugmaschine können Mittel zum Klemmen und/oder Arretieren des Gelenkkugelkörpers in dem Lager vorgesehen werden. Günstigerweise ist die Gelenkanordnung in der Trägereinrichtung horizontal und/oder vertikal verlagerbar.

Für das Ausrichten der Drehachse der Maschinenspindel umfasst der Werkzeugkopf einen Führungsdorn, der als Zentrierzapfen wirkt und der mit der Drehachse der Maschinenspindel fluchtet. Dies ermöglicht das selbsttätige, automatische Ausrichten der Maschinenspindel der Werkzeugmaschine mit der Achse einer Bohrung oder mit der Achse der Öffnung an einem Ventilsitz in einem Zylinderkopf.

Von Vorteil ist es, in der Mechatronikbaugruppe einen die Drehzahl der Maschinenspindel erfassenden Drehgeber vorzusehen und/oder in der Mechatronikbaugruppe einen Positionsgeber zu integrieren, der die Position des Arbeitsschiebers erfasst.

Für das Aufnehmen des Zylinderkopfes eines Verbrennungsmotors enthält die Werkzeugmaschine eine Spannvorrichtung. Die Mechatronikbaugruppe enthält vorzugsweise einen Drehverteiler. Dieser ermöglicht das steuerbare Verteilen von Fluid auf verschiedene Funktionskanäle.

Im Folgenden wird die Erfindung anhand des in der Zeichnung in schematischer Weise dargestellten Ausführungsbeispiels näher erläutert.

Es zeigen:
- Fig. 1: eine Werkzeugmaschine für das Nachbearbeiten von Ventilsitzen mit einer Mechatronikbaugruppe, die einen Werkzeugkopf umfasst;
- Fig. 2: die Mechatronikbaugruppe mit dem Werkzeugkopf; und
- Fig. 3: den Werkzeugkopf mit einem Schneidwerkzeug an einem Ventilsitz.

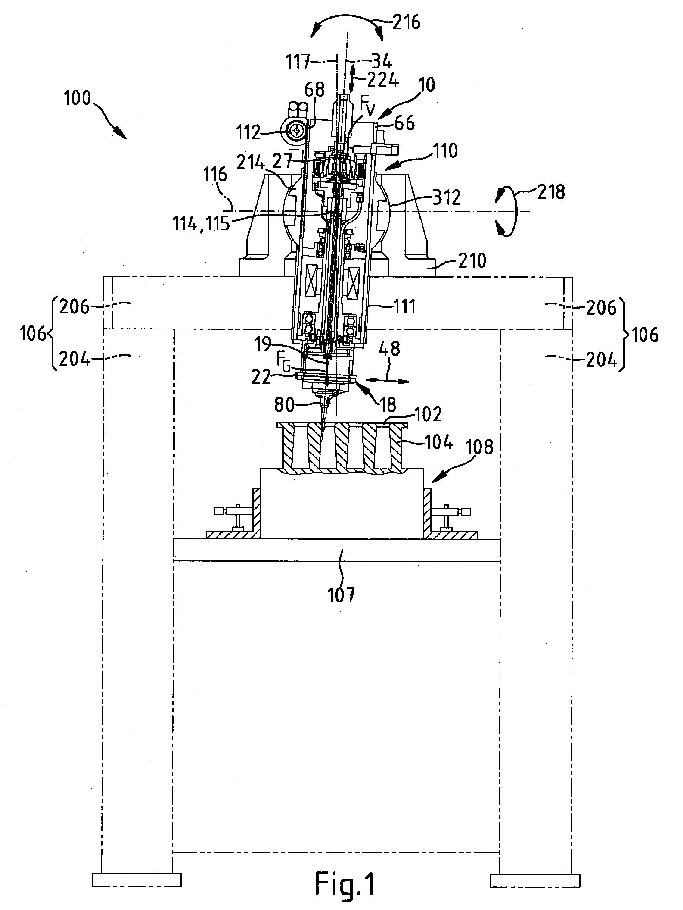

Die Werkzeugmaschine 100 in Fig. 1 hat eine Spannvorrichtung 108 für den Zylinderkopf 104 einer Brennkraftmaschine. Die Werkzeugmaschine 100 enthält eine Mechatronikbaugruppe 10. Die Mechatronikbaugruppe 10 hat einen Werkzeugkopf 18 mit einem Schneidwerkzeug. Die Mechatronikbaugruppe 10 befindet sich in einer Hülse 111. Die Mechatronikbaugruppe 10 ist in der Hülse 111 linearbeweglich geführt. Mit der Hülse 111 ist die Mechatronikbaugruppe 10 an einer Trägereinrichtung 106 aufgenommen. Die Trägereinrichtung 106 umfasst ein Maschinenbett 206. Das Maschinenbett 206 ist ein Lager für einen Führungsschlitten 210. Der Führungsschlitten 210 trägt eine Gelenkanordnung 110 für die Mechatronikbaugruppe 10. Die Gelenkanordnung 110 ist als Luftkissen-gelagertes Kugelgelenk 110 ausgebildet. Das Kugelgelenk 110 hat eine Gelenkschale 312, die in dem Führungsschlitten 210 ausgebildet ist. Die Hülse 111 für die Mechatronikbaugruppe 10 weist einen Gelenkkörper 214 auf. Dieser Gelenkkörper 214 hat eine Kugelflächenkontur. Die Trägereinrichtung 106 ist als Portal ausgeführt. Die Trägereinrichtung 106 hat Trägersäulen 204, die das Maschinenbett 206 tragen.

An dem Maschinenbett 206 kann der Führungsschlitten 210 auf einem Luftkissen in zwei Raumrichtungen horizontal bewegt werden. Der Führungsschlitten 210 mit der Gelenkanordnung 110 der Mechatronikbaugruppe 10 kann damit an dem Maschinenbett 206 in der horizontalen Ebene quasi kräftefrei verlagert werden.

Das Luftkissen in dem Kugelgelenk 110 ist steuerbar. Das Luftkissen wirkt als Luftlager. Das Kugelgelenk 110 hat ein Drehzentrum 114. Bei Einschalten des Luftlagers kann die Mechatronikbaugruppe 10 mit der Hülse 111 in dem luftgelagerten Kugelgelenk 110 um eine das Drehzentrum 114 schneidende horizontale Achse 115 entsprechend dem Doppelpfeil 216 geschwenkt und entsprechend dem Doppelpfeil 218 um die das Drehzentrum 114 schneidende horizontale Achse 116 bewegt sowie um die das Drehzentrum 114 schneidende vertikale Achse 117 gedreht werden.

Die Mechatronikbaugruppe 10 umfasst einen Werkzeugkopf 18 mit einem Schneidwerkzeug. Der Werkzeugkopf 18 weist einen Führungsdorn 80 auf. Dieser Führungsdorn 80 dient zum exakten Positionieren des Schneidwerkzeugs an einem Ventilsitz.

Die Werkzeugmaschine 100 hat einen verstellbaren Tisch 107 mit einer Spannvorrichtung 108 für den Zylinderblock 104 einer Brennkraftmaschine mit einem oder mehreren Ventilsitzen 102.

Die Mechatronikbaugruppe 10 umfasst ein Gehäuse 66, das als Pinole ausgebildet ist. Diese Pinole hat einen als Zahnstange ausgebildeten Wirkabschnitt 68 für eine Antriebseinheit 112. Die Antriebseinheit 112 ist an der Hülse 111 aufgenommen. Mittels der Antriebseinheit 112 kann die Mechatronikbaugruppe 10 entsprechend dem Doppelpfeil 224 in der Hülse 111 bewegt werden.

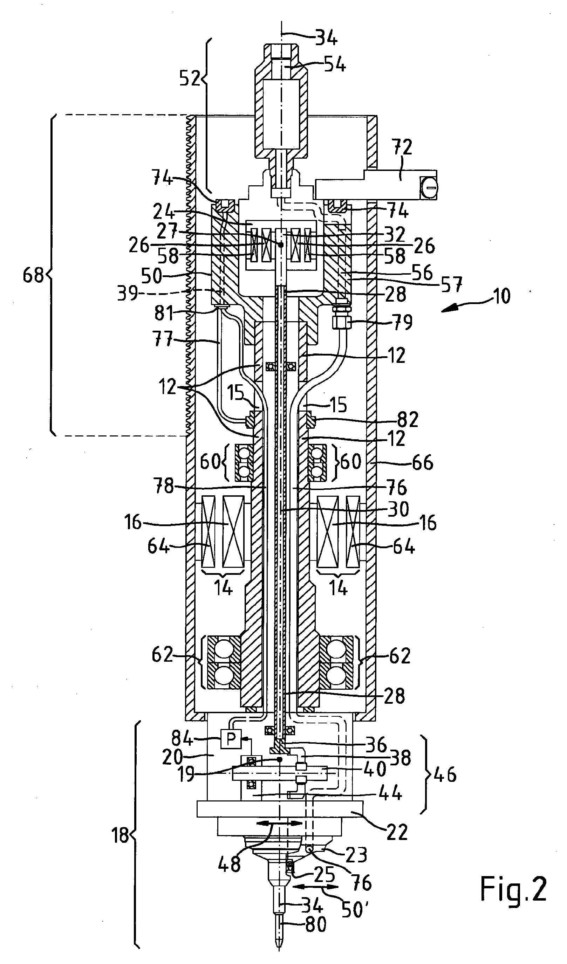

Die Fig. 2 zeigt die Maschinenbaugruppe 10 in der Werkzeugmaschine 100 im Detail. Die Mechatronikbaugruppe 10 enthält eine Maschinenspindel 12. Die Maschinenspindel 12 hat eine Drehachse 34. An die Maschinenspindel 12 ist der Werkzeugkopf 18 angeschlossen. Der Werkzeugkopf 18 trägt ein Schneidwerkzeug 25. Für den Antrieb der Maschinenspindel 12 gibt es in der Mechatronikbaugruppe 10 einen Spindelmotor 14. Der Spindelmotor 14 ist im Gehäuse 66 der Mechatronikbaugruppe 10 aufgenommen. Mittels des Spindelmotors 14 kann der Werkzeugkopf 18 mit dem Schneidwerkzeug 25 rotierend bewegt werden.

Das Schneidwerkzeug 25 an dem Werkzeugkopf 18 ist verstellbar. Hierzu ist das Schneidwerkzeug an einem Arbeitsschieber 22 im Werkzeugkopf festgelegt. Der Arbeitsschieber 22 kann in einer Linearführung in einem Grundkörper 20 des Werkzeugkopfs 18 bewegt werden. Dem Arbeitsschieber 22 ist ein elektrischer Verstellmotor 24 zugeordnet. Der Verstellmotor 24 hat einen Masseschwerpunkt 27. Der Verstellmotor 24 ist in einem rückwärtigen Abschnitt der Mechatronikbaugruppe 10 aufgenommen. Dieser Abschnitt der Mechatronikbaugruppe 10 ist dem Werkzeugkopf 18 abgewandt. Der Verstellmotor 24 befindet sich auf der dem Werkzeugkopf 18 abgewandten Seite des Drehzentrums 114 der Gelenkanordnung 110. Dies bewirkt, dass die Gewichtskraft F_{V} des Verstellmotors 24, die in dessen Schwerpunkt 27 angreift, wenigstens teilweise jenes Drehmoment kompensiert, das die im Schwerpunkt 19 des Werkzeugkopfs 18 angreifende Gewichtskraft F_{G} des Werkzeugkopfs 18 bei einem Verschwenken der Mechatronikbaugruppe 10 um das Drehzentrum 114 hervorruft.

Wie die Fig. 2 zeigt, ist die Maschinenspindel 12 mit einem ersten Drehlager 60 und einem zweiten Drehlager 62 in dem Gehäuse 66 der Mechatronikbaugruppe 10 gelagert. Für den Antrieb der Maschinenspindel 12 enthält die Mechatronikbaugruppe einen Spindelmotor 14. Der Spindelmotor 14 hat einen Rotor 16, der mit der Maschinenspindel 12 drehgekoppelt ist. Der Stator 64 des Spindelmotors ist in dem Gehäuse der Mechatronikbaugruppe 10 festgelegt. Die Maschinenspindel 12 ist eine Hohlspindel.

Der Verstellmotor 24 hat einen Rotor 26, dessen Drehachse 32 mit der Rotordrehachse 30 des Spindelmotors 14 fluchtet. Der Rotor 26 des Verstellmotors 24 ist mit einer Antriebswelle 28 für das Bewegen des Arbeitsschiebers 22 drehfest verbunden. Die Antriebswelle 28 ist eine Hohlwelle, die durch die Maschinenspindel 12 hindurchgreift. Der Stator 58 des Verstellmotors 24 ist in einer Aufnahme 50 in der Mechatronikbaugruppe 10 festgelegt. Die Antriebswelle 28 wirkt auf ein in dem Werkzeugkopf 18 drehbar gelagertes Zahnrad 36 in einem Umsetzungsgetriebe 46. Das Umsetzungsgetriebe 46 hat ein Getrieberad 38, eine Gewindespindel 40 und eine Baugruppe 44 mit Gewinde. Das Zahnrad 36 ist mit dem Getrieberad 38 gekoppelt. Das Getrieberad 38 wiederum ist mit der Gewindespindel 40 starr verbunden. Die Gewindespindel 40 wirkt auf das Innengewinde der Baugruppe 44. Die Baugruppe 44 ist an dem Arbeitsschieber 22 für das Schneidwerkzeug festgelegt. Mittels des Verstellmotors 24 kann damit der Arbeitsschieber 22 entsprechend dem Doppelpfeil 48 bewegt werden, was eine Verlagerung des mit einer Halteeinrichtung 23 an dem Arbeitsschieber 22 aufgenommenen Schneidwerkzeugs 25 entsprechend dem Doppelpfeil 50' bewirkt.

Das Umsetzungsgetriebe 46 ist ein Untersetzungsgetriebe. Grundsätzlich kann das Umsetzungsgetriebe auch als Planetengetriebe oder als Harmonic Drive ausgeführt werden. Es ist es möglich, auch zwischen dem Verstellmotor und der Antriebswelle ein Umsetzungsgetriebe vorzusehen.

An dem Gehäuse 66 der Mechatronikbaugruppe 10 ist für die Übertragung von Energie und Daten eine Primärspule 72 festgelegt. Zusammen mit einer Sekundärspule 74, die in der Aufnahme 50 für den Verstellmotor 24 montiert ist, bildet diese eine induktive Übertragungsstrecke für Energie und Daten.

Die Mechatronikbaugruppe 10 hat eine Drehdurchführung 52 für einen Funktionskanal 54. In der Mechatronikbaugruppe 10 mündet der Funktionskanal 54 in einen Funktionskanal 56, der in einer Wandung 57 der Aufnahme 50 für den Verstellmotor 24 verläuft. Es ist auch möglich, den Funktionskanal 56 in einer Aussparung an dem Gehäuse der Aufnahme 50 zu führen. Der Funktionskanal 56 ist über eine als Schraubkupplung 79 ausgebildetes Kupplungselement 79 mit der Rohrleitung 76 verbunden, die zu dem Werkzeugkopf 18 geführt ist. Durch die Rohrleitung 76 kann bei rotierender Maschinenspindel 12 Blasluft oder Kühlflüssigkeit am Schneidwerkzeug 25 bereitgestellt werden. Die Maschinenspindel 12 hat hierfür eine fensterförmige Durchbrechung 15 für die Rohrleitung 76.

In der Aufnahme 50 gibt es auch eine elektrische Leitung 39, die von der Sekundärspule 74 zu dem Steckeranschluss 81 gelegt. An Steckeranschluss 81 ist ein Funktionskanal in Form einer elektrischen Leitung 77 und einer elektrischen Leitung 78 angeschlossen, die mit einem Drehgeber für das Erfassen der Drehzahl der Maschinenspindel bzw. mit einem Positionsgeber 84 für das Erfassen der Position des Arbeitsschiebers 22 verbunden ist.

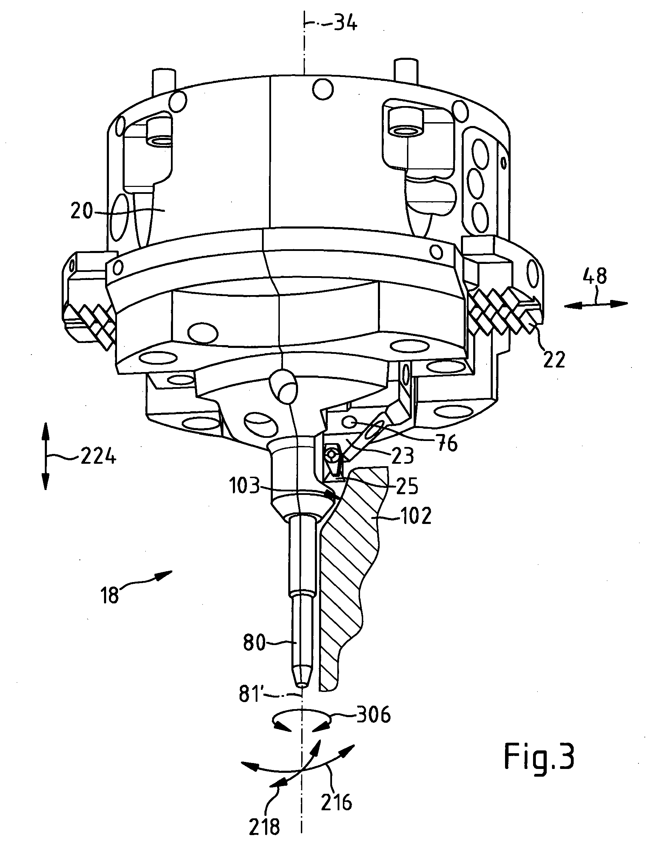

Die Fig. 3 zeigt einen Abschnitt des Werkzeugkopfs 18 mit dem Führungsdorn 80 an einem Ventilsitz 102, der eine Achse 81' hat. Das Schneidwerkzeug 25 ist eine Wechselschneidplatte. Die Wechselschneidplatte 25 ist in einen Schneidplattenhalter 23 montiert, der an dem Arbeitsschieber 22 befestigt ist. Mittels des Verstellmotors 24 kann der Arbeitsschieber 22 entsprechend dem Doppelpfeil 48 bewegt werden. Über den Spindelmotor 14 kann der Werkzeugkopf 18 um die Achse 34 entsprechend dem Doppelpfeil 306 rotiert werden. Die in der Fig. 1 gezeigte Antriebseinheit 112 ermöglicht, den Werkzeugkopf 18 mit der Pinole 66 entsprechend dem Doppelpfeil 224 in Richtung der Drehachse 34 der Maschinenspindel zu verlagern. In der Gelenkanordnung 110 kann der Werkzeugkopf um das Zentrum 114 längs entsprechend den Doppelpfeilen 216, 218 verschwenkt werden. Die Mechatronikbaugruppe 10 ermöglicht so das Bearbeiten von beliebigen rotationssymmetrischen Flächenkonturen 103 an einem Ventilsitz 102.

Zusammenfassend sind folgende bevorzugte Merkmale festzuhalten. Die Erfindung betrifft eine Werkzeugmaschine 100 für Drehbearbeitung, mit der insbesondere Ventilsitze 102 an Zylinderköpfen 104 bearbeitet werden können. Die Werkzeugmaschine 100 hat eine Mechatronikbaugruppe 10, die eine Maschinenspindel 12 enthält. Die Mechatronikbaugruppe 10 umfasst ein an der Maschinenspindel 12 aufgenommenen Werkzeugkopf 18, der einen Grundkörper 20 sowie mindestens einen relativ zu dem Grundkörper 20 verstellbaren Arbeitsschieber 22 für die Aufnahme eines Werkzeugs aufweist. Die Mechatronikbaugruppe 10 enthält einen Verstellmotor 24, der auf den Arbeitsschieber 22 einwirkt. Die Werkzeugmaschine 100 hat eine die Mechatronikbaugruppe 10 aufnehmende Trägereinrichtung 106. Die Trägereinrichtung 106 umfasst eine Gelenkanordnung 110, an der die Mechatronikbaugruppe 10 wenigstens um eine erste Achse 114 und um eine von der ersten Achse 114 verschiedene zweite Achse 116 geschwenkt werden kann. Der Verstellmotor 24 ist in der Mechatronikbaugruppe 10 derart positioniert, dass die Gewichtskraft F_{V} des Verstellmotors 24 wenigstens teilweise jenes Drehmoment kompensiert, das die Gewichtskraft F_{G} des Werkzeugskopfs 18 bei einem Verschwenken der Mechatronikbaugruppe um die erste Achse 114 und über die zweite Achse 116 hervorruft.

## Patentansprüche

1. Werkzeugmaschine (100) für Drehbearbeitung, insbesondere für die Bearbeitung von Ventilsitzen (102) an Zylinderköpfen (104),
mit einer Mechatronikbaugruppe (10), die eine Maschinenspindel (12) aufweist,
mit einem an der Maschinenspindel (12) aufgenommenen Werkzeugkopf (18), der einen Grundkörper (20) sowie mindestens einen relativ zu dem Grundkörper (20) verstellbaren Arbeitsschieber (22) für die Aufnahme eines Werkzeugs (25) aufweist,
mit einem auf den Arbeitsschieber (22) einwirkenden elektrischen Verstellmotor (24), und
mit einer die Mechatronikbaugruppe (10) aufnehmenden Trägereinrichtung (106),
**dadurch gekennzeichnet, dass**
die Trägereinrichtung (106) eine als ein Kugelgelenk mit einem Kugelzentrum (114) ausgebildete Gelenkanordnung (110) umfasst, an der die Mechatronikbaugruppe (10) um eine erste Achse (115) und um eine von der ersten Achse (115) verschiedene zweite Achse (116) geschwenkt werden kann, wobei der Masseschwerpunkt (27) des Verstellmotors (24) auf der dem Werkzeugkopf (18) abgewandten Seite der ersten Achse (115) angeordnet ist, um damit wenigstens teilweise jenes Drehmoment zu kompensieren, das die Gewichtskraft (F_{G}) des Werkzeugkopfs (18) bei einem Verschwenken der Mechatronikbaugruppe (10) um die erste Achse (115) hervorruft.

2. Werkzeugmaschine nach Anspruch 1, **dadurch gekennzeichnet, dass** der Masseschwerpunkt (27) des Verstellmotors (24) und der Massenschwerpunkt des Werkzeugkopfs (18) auf der zweiten Achse (116) liegt.

3. Werkzeugmaschine nach Anspruch 1 oder 2, **dadurch gekennzeichnet, dass** die Mechatronikbaugruppe (10) um das Kugelzentrum (114) geschwenkt werden kann, wobei der Masseschwerpunkt (27) des Verstellmotors (24) auf der dem Werkzeugkopf (18) abgewandten Seite des Kugelzentrums (114) angeordnet ist.

4. Werkzeugmaschine nach Anspruch 2 oder 3, **dadurch gekennzeichnet, dass** das Kugelgelenk (110) einen Gelenkkörper (214) aufweist, der in einem Luftlager oder einem hydrostatischen Lager gelagert ist oder der in einem magnetischen Lager magnetisch gelagert ist.

5. Werkzeugmaschine nach Anspruch 4, **dadurch gekennzeichnet, dass** Mittel zum Klemmen und/oder Arretieren des Gelenkkörpers (214) in dem Lager vorgesehen sind.

6. Werkzeugmaschine nach einem der Ansprüche 1 bis 5, **dadurch gekennzeichnet, dass** die Mechatronikbaugruppe (10) einen die Maschinenspindel (12) antreibenden elektrischen Spindelmotor (14) aufweist, der einen mit der Maschinenspindel (12) drehgekoppelten, vorzugsweise eine Hohlwellengeometrie aufweisenden Rotor (16) umfasst, wobei der Verstellmotor (24) einen auf den Arbeitsschieber (22) einwirkenden Rotor (26) hat, und wobei die Rotordrehachse (30) des Spindelmotors (14) und die Rotordrehachse (32) des Verstellmotors (24) mit der Drehachse (34) der Maschinenspindel (12) fluchten.

7. Werkzeugmaschine nach Anspruch 6, **dadurch gekennzeichnet, dass** die Maschinenspindel (12) mit wenigstens einem ersten Drehlager (60) und einem zweiten Drehlager (62) in einem mit dem Stator (64) des Spindelmotors (14) drehfest verbundenen, vorzugsweise als Pinole ausgebildeten Gehäuse (66) gelagert ist, wobei der Spindelmotor (14) zwischen dem ersten Drehlager (60) und dem zweiten Drehlager (62) auf die Maschinenspindel (12) einwirkt.

8. Werkzeugmaschine nach Anspruch 7, **dadurch gekennzeichnet, dass** das Gehäuse (66) einen vorzugsweise als Zahnstange ausgebildeten Wirkabschnitt (68) für eine Antriebseinheit (112) für das Verlagern der Mechatronikbaugruppe (10) in Richtung der Drehachse (34) der Maschinenspindel (12) aufweist und/oder dass für die Übertragung von Energie und Daten an dem Gehäuse (66) eine Primärspule (72) festgelegt ist, die mit einer an einer mit der Maschinenspindel (12) fest verbundenen Aufnahme (50) für den Verstellmotor (24) festgelegten Sekundärspule (74) eine induktive Übertragungsstrecke für Energie und Daten bildet.

9. Werkzeugmaschine nach einem der Ansprüche 6 bis 8, **dadurch gekennzeichnet, dass** der Verstellmotor (24) auf einer dem Werkzeugkopf (18) abgewandten Seite des Spindelmotors (14) angeordnet ist.

10. Werkzeugmaschine nach einem der Ansprüche 6 bis 9, **dadurch gekennzeichnet, dass** die Maschinenspindel als Hohlspindel (12) ausgebildet ist, durch die eine mit dem Rotor (26) des Verstellmotors (24) drehgekoppelte Antriebswelle (28) zur Bewegungskopplung von Arbeitsschieber (22) und Verstellmotor (24) hindurchgreift.

11. Werkzeugmaschine nach Anspruch 10, **dadurch gekennzeichnet, dass** der Verstellmotor (24) auf den Arbeitsschieber (22) über mit der Antriebswelle (28) verbundene Getriebemittel (46) in Verstellrichtung (48) einwirkt.

12. Werkzeugmaschine nach Anspruch 11, **dadurch gekennzeichnet, dass** die Getriebemittel (46) ein im Werkzeugkopf (18) angeordnetes Umsetzungsgetriebe (36,38,40,44) umfassen, das eine Drehbewegung der Antriebswelle (28) in eine Linearbewegung des Arbeitsschiebers (22) wandelt.

13. Werkzeugmaschine nach Anspruch 11 oder 12, **dadurch gekennzeichnet, dass** die Getriebemittel ein die Drehbewegung des Rotors (26) des Verstellmotors (24) umsetzendes, vorzugsweise als Planetengetriebe oder als Harmonic Drive ausgebildetes Untersetzungsgetriebe umfassen.

14. Werkzeugmaschine nach Anspruch 13, **dadurch gekennzeichnet, dass** das Untersetzungsgetriebe im Werkzeugkopf (18) angeordnet ist und/oder dass das Untersetzungsgetriebe zwischen dem Verstellmotor (24) und der Antriebswelle (28) angeordnet ist.

15. Werkzeugmaschine nach einem der Ansprüche 10 bis 14, **dadurch gekennzeichnet, dass** die Hohlspindel (12) eine vorzugsweise fensterförmig ausgebildete Durchbrechung (15) für einen Funktionskanal (76, 78) hat.

16. Werkzeugmaschine nach einem der Ansprüche 1 bis 15, **dadurch gekennzeichnet, dass** der Verstellmotor (24) an einer an der Maschinenspindel (12) befestigten Aufnahme (50) angeordnet ist, die eine Drehdurchführung (52) für einen Funktionskanal (54) aufweist, welche in einen vorzugsweise in einer Wandung oder Aussparung der Aufnahme (50) verlaufenden Funktionskanal (56) mündet.

17. Werkzeugmaschine nach Anspruch 16, **dadurch gekennzeichnet, dass** der Stator (58) des Verstellmotors (24) relativ zur Maschinenspindel (12) stationär angeordnet ist.

18. Werkzeugmaschine nach einem der Ansprüche 1 bis 17, **dadurch gekennzeichnet, dass** die Mechatronikbaugruppe (10) mindestens einen Funktionskanal (76) für Fluid, insbesondere einen Funktionskanal für Kühlschmierstoff und/oder einen Funktionskanal (78) für elektrische Leitungen zur Energie- und/oder Datenübertragung zur Übertragung einer Werkzeugposition in den Werkzeugkopf (18) aufweist.

19. Werkzeugmaschine nach Anspruch 18, **dadurch gekennzeichnet, dass** der Funktionskanal (76,78) eine in der Mechatronikbaugruppe (10) ortsfest montierte, mit der Maschinenspindel (12) bewegte Rohrleitung oder Schlauchleitung ist und/oder dass der Funktionskanal (76,78) Kupplungselemente (79,81) für das Verbinden von Funktionskanalabschnitten aufweist.

20. Werkzeugmaschine nach einem der Ansprüche 10 bis 19, **dadurch gekennzeichnet, dass** die Antriebswelle (28) mindestens einen Funktionskanal für Fluid, insbesondere für Kühlschmierstoff oder für elektrische Leitungen zur Energie- und/oder Datenübertragung aufweist.

21. Werkzeugmaschine nach Anspruch 20, **dadurch gekennzeichnet, dass** die Antriebswelle zur Bewegungskopplung von Arbeitsschieber (22) und Verstellmotor (24) als Hohlwelle (28) ausgebildet ist.

22. Werkzeugmaschine nach einem der Ansprüche 1 bis 21, **dadurch gekennzeichnet, dass** der Werkzeugkopf (18) für das selbsttätige Ausrichten der Drehachse (34) der Maschinenspindel (12) mit einer Achse, etwa der Achse einer Bohrung oder der Achse (81') eines Ventilsitzes (102) einen Führungszapfen (80) trägt, der mit der Drehachse (34) der Maschinenspindel (12) fluchtet und/oder dass ein die Drehzahl der Maschinenspindel (12) erfassender Drehgeber (82) vorgesehen ist; und/oder dass ein die Position des Arbeitsschiebers (22) erfassender Positionsgeber (84) vorgesehen ist; und/oder dass die Gelenkanordnung (110) in der Trägereinrichtung (106) horizontal und/oder vertikal verlagerbar ist; und/oder dass eine Spannvorrichtung (108) für das Aufnehmen eines Zylinderkopfes (104) vorgesehen ist; und/oder dass ein Drehverteiler für das steuerbare Verteilen von Fluid auf verschiedene Funktionskanäle vorgesehen ist.

23. Mechatronikbaugruppe (10) zur Aufnahme mit einer eine Gelenkanordnung (110) umfassenden Trägereinrichtung (106) in einer Werkzeugmaschine (100), mit einer Maschinenspindel (12), mit einem an der Maschinenspindel (12) aufgenommenen Werkzeugkopf (18), der einen Grundkörper (20) sowie mindestens einen relativ zu dem Grundkörper (20) verstellbaren Arbeitsschieber (22) für die Aufnahme eines Werkzeugs (25) aufweist, und mit einem auf den Arbeitsschieber (22) einwirkenden elektrischen Verstellmotor (24) mit einem Rotor (26),
**dadurch gekennzeichnet, dass**
die Gelenkanordnung (110) als ein Kugelgelenk mit einem Kugelzentrum (114) ausgeführt ist, wobei die Maschinenspindel (12) als eine Hohlspindel ausgebildet ist, durch die eine mit dem Rotor (26) des Verstellmotors (24) drehgekoppelte Antriebswelle (28) durch die Maschinenspindel (12) zur Bewegungskopplung von Arbeitsschieber (22) und Verstellmotor (24) hindurchgreift; und wobei
der Verstellmotor (24) auf der dem Werkzeugkopf (18) abgewandten Seite der Maschinenspindel (12) angeordnet ist, um bei Aufnahme der Mechatronikbaugruppe (10) in der Trägereinrichtung (106) zu ermöglichen, dass durch Positionieren des Massenschwerpunkts (27) des Verstellmotors (24) auf der dem Werkzeugkopf (18) abgewandten Seite der ersten Achse (115) der Gelenkanordnung (110) wenigstens teilweise jenes Drehmoment kompensiert wird, das die Gewichtskraft (F_{G}) des Werkzeugkopfs (18) bei einem Verschwenken der Mechatronikbaugruppe (10) um die erste Achse (115) hervorruft.

24. Verwendung einer mit einer eine Gelenkanordnung (110) umfassenden Trägereinrichtung (106) in einer Werkzeugmaschine (100) aufgenommenen Mechatronikbaugruppe (10) mit einer Maschinenspindel (12), mit einem an der Maschinenspindel (12) aufgenommenen Werkzeugkopf (18), der einen Grundkörper (20) sowie mindestens einen relativ zu dem Grundkörper (20) verstellbaren Arbeitsschieber (22) für die Aufnahme eines Werkzeugs (25) aufweist, und mit einem auf den Arbeitsschieber (22) einwirkenden elektrischen Verstellmotor (24),
**dadurch gekennzeichnet, dass**
die Gelenkanordnung (110) als ein Kugelgelenk mit einem Kugelzentrum (114) ausgeführt ist, wobei der Verstellmotor (24) auf der dem Werkzeugkopf (18) abgewandten Seite der Maschinenspindel (12) angeordnet ist, wobei der Massenschwerpunkts (27) des Verstellmotors (24) auf der dem Werkzeugkopf (18) abgewandten Seite der ersten Achse (115) der Gelenkanordnung (110) positioniert ist, um wenigstens teilweise jenes Drehmoment zu kompensieren, das die Gewichtskraft (F_{G}) des Werkzeugkopfs (18) bei einem Verschwenken der Mechatronikbaugruppe (10) um die erste Achse (115) hervorruft.

## Claims

1. Machine tool (100) for rotary machining, especially for the machining of valve seats (102) on cylinder heads (104),
with a mechatronic assembly (10) which has a machine spindle (12),
with a tool head (18), mounted on the machine spindle (12), which tool head has a basic body (20) and also at least one working slide (22), which is adjustable relative to the basic body (20), for accommodating a tool (25),
with an electric adjusting motor (24) which acts upon the working slide (22), and
with a carrier device (106) which accommodates the mechatronic assembly (10),
**characterized in that**
the carrier device (106) comprises an articulated arrangement (110) which is designed as a ball joint with a ball center (114) and on which the mechatronic assembly (10) can be pivoted around a first axis (115) and around a second axis (116) which differs from the first axis (115), wherein the mass center of gravity (27) of the adjusting motor (24) is arranged on the side of the first axis (115) which faces away from the tool head (18) in order to thus at least partially compensate that torque which the weight force (F_{G}) of the tool head (18) induces when the mechatronic assembly (10) is pivoted around the first axis (115).

2. Machine tool according to Claim 1, **characterized in that** the mass center of gravity (27) of the adjusting motor (24) and the mass center of gravity of the tool head (18) lie on the second axis (116).

3. Machine tool according to Claim 1 or 2, **characterized in that** the mechatronic assembly (10) can be pivoted around the ball center (114), wherein the mass center of gravity (27) of the adjusting motor (24) is arranged on the side of the ball center (114) which faces away from the tool head (18).

4. Machine tool according to Claim 2 or 3, **characterized in that** the ball joint (110) has a joint body (214) which is supported in an air bearing or a hydrostatic bearing or which is magnetically supported in a magnetic bearing.

5. Machine tool according to Claim 4, **characterized in that** means are provided for the clamping and/or the locking of the joint body (214) in the bearing.

6. Machine tool according to one of Claims 1 to 5, **characterized in that** the mechatronic assembly (10) has an electric spindle motor (14) which drives the machine spindle (12) and comprises a rotor (16) which is rotatably coupled to the machine spindle (12) and preferably has a hollow shaft geometry, wherein the adjusting motor (24) has a rotor (26) which acts upon the working slide (22), and wherein the rotational axis (30) of the rotor of the spindle motor (14) and the rotational axis (32) of the rotor of the adjusting motor (24) align with the rotational axis (34) of the machine spindle (12).

7. Machine tool according to Claim 6, **characterized in that** the machine spindle (12) is supported by at least a first pivot bearing (60) and a second pivot bearing (62) in a housing (66) which is preferably formed as a quill and connected in a rotation-resistant manner to the stator (64) of the spindle motor (14), wherein the spindle motor (14) acts upon the machine spindle (12) between the first pivot bearing (60) and the second pivot bearing (62).

8. Machine tool according to Claim 7, **characterized in that** the housing (66) has an operating section (68), preferably designed as a toothed rack, for a drive unit (112) for displacing the mechatronic assembly (10) in the direction of the rotational axis (34) of the machine spindle (12) and/or **in that** for the transmission of energy and data a primary coil (72) is fastened on the housing (66) and together with a secondary coil (74) - which is fastened on a holder (50), fixedly connected to the machine spindle (12), for the adjusting motor (24) - forms an inductive transmission path for energy and data.

9. Machine tool according to one of Claims 6 to 8, **characterized in that** the adjusting motor (24) is arranged on a side of the spindle motor (14) which faces away from the tool head (18).

10. Machine tool according to one of Claims 6 to 9, **characterized in that** the machine spindle is designed as a hollow spindle (12) through which passes a drive shaft (28), which is rotatably coupled to the rotor (26) of the adjusting motor (24), for the movement coupling of working slide (22) and adjusting motor (24).

11. Machine tool according to Claim 10, **characterized in that** the adjusting motor (24) acts upon the working slide (22) in the adjusting direction (48) via gearing means (46) which are connected to the drive shaft (28).

12. Machine tool according to Claim 11, **characterized in that** the gearing means (46) comprise a conversion gear (36, 38, 40, 44), arranged in the tool head (18), which converts a rotational movement of the drive shaft (28) into a linear movement of the working slide (22).

13. Machine tool according to Claim 11 or 12, **characterized in that** the gearing means comprise a reduction gear, preferably designed as a planetary gearing or as a harmonic drive, which converts the rotational movement of the rotor (26) of the adjusting motor (24).

14. Machine tool according to Claim 13, **characterized in that** the reduction gear is arranged in the tool head (18) and/or **in that** the reduction gear is arranged between the adjusting motor (24) and the drive shaft (28).

15. Machine tool according to one of Claims 10 to 14, **characterized in that** the hollow spindle (12) has an opening (15) of preferably window-like design for a function channel (76, 78).

16. Machine tool according to one of Claims 1 to 15, **characterized in that** the adjusting motor (24) is arranged on a holder (50) which is fastened on the machine spindle (12), which holder has a rotary lead-through (52) for a function channel (54) which opens into a function channel (56) which extends preferably in a wall or recess of the holder (50).

17. Machine tool according to Claim 16, **characterized in that** the stator (58) of the adjusting motor (24) is arranged in a stationary manner relative to the machine spindle (12).

18. Machine tool according to one of Claims 1 to 17, **characterized in that** the mechatronic assembly (10) has at least one function channel (76) for fluid, especially a function channel for cooling lubricant and/or a function channel (78) for electrical leads for transmission of energy and/or data for transmitting a tool position to the tool head (18).

19. Machine tool according to Claim 18, **characterized in that** the function channel (76, 78) is a pipeline or hoseline which is fixedly mounted in the mechatronic assembly (10) and movable with the machine spindle (12) and/or **in that** the function channel (76, 78) has coupling elements (79, 81) for the connecting of function channel sections.

20. Machine tool according to one of Claims 10 to 19, **characterized in that** the drive shaft (28) has at least one function channel for fluid, especially for cooling lubricant, or for electrical leads for transmission of energy and/or data.

21. Machine tool according to Claim 20, **characterized in that** the drive shaft for the movement coupling of working slide (22) and adjusting motor (24) is designed as a hollow shaft (28).

22. Machine tool according to one of Claims 1 to 21, **characterized in that** the tool head (18), for the automatic aligning of the rotational axis (34) of the machine spindle (12) with an axis, for example the axis of a bore or the axis (81') of a valve seat (102), carries a guide pin (80) which aligns with the rotational axis (34) of the machine spindle (12) and/or **in that** provision is made for a rotary transducer (82) which senses the rotational speed of the machine spindle (12); and/or **in that** provision is made for a position transducer (84) which senses the position of the working slide (22); and/or **in that** the articulated arrangement (110) can be displaced horizontally and/or vertically in the carrier device (106); and/or **in that** a chucking device (108) is provided for the holding of a cylinder head (104); and/or **in that** a rotary distributor is provided for the controllable distribution of fluid to various function channels.

23. Mechatronic assembly (10) for accommodating in a machine tool (100) by way of a carrier device (106) comprising an articulated arrangement (110), with a machine spindle (12), with a tool head (18) mounted on the machine spindle (12), which tool head (18) has a basic body (20) and also at least one working slide (22), which is adjustable relative to the basic body (20), for the mounting of a tool (25), and with an electric adjusting motor (24), having a rotor (26), acting upon the working slide (22),
**characterized in that**
the articulated arrangement (110) is constructed as a ball joint with a ball center (114), wherein the machine spindle (12) is designed as a hollow spindle through which passes a drive shaft (28), which is rotatably coupled to the rotor (26) of the adjusting motor (24), through the machine spindle (12) for the movement coupling of working slide (22) and adjusting motor (24); and wherein the adjusting motor (24) is arranged on the side of the machine spindle (12) which faces away from the tool head (18), in order, when the mechatronic assembly (10) is accommodated in the carrier device (106), to enable that torque which the weight force (F_{G}) of the tool head (18) induces when the mechatronic assembly (10) is being pivoted around the first axis (115) to be at least partially compensated, by positioning the mass center of gravity (27) of the adjusting motor (24) on the side of the first axis (115) of the articulated arrangement (110) which faces away from the tool head (18).

24. Use of a mechatronic assembly (10) accommodated in a machine tool (100) by way of a carrier device (106) comprising an articulated arrangement (110), with a machine spindle (12), with a tool head (18) mounted on the machine spindle (12), which tool head (18) has a basic body (20) and also at least one working slide (22), which is adjustable relative to the basic body (20), for the mounting of a tool (25), and with an electric adjusting motor (24) acting upon the working slide (22),
**characterized in that**
the articulated arrangement (110) is constructed as a ball joint with a ball center (114), wherein the adjusting motor (24) is arranged on the side of the machine spindle (12) which faces away from the tool head (18), wherein the mass center of gravity (27) of the adjusting motor (24) is positioned on the side of the first axis (115) of the articulated arrangement (110) which faces away from the tool head (18) in order to at least partially compensate that torque which the weight force (F_{G}) of the tool head (18) induces when the mechatronic assembly (10) is being pivoted around the first axis (115).

## Revendications

1. Machine-outil (100) de tournage, en particulier pour usiner des sièges de soupape (102) sur des têtes de cylindre (104),
comprenant un groupe mécatronique (10) qui présente une broche de machine (12),
comprenant une tête d'outil (18) reçue sur la broche de machine (12), qui présente un corps de base (20) ainsi qu'au moins un tiroir de travail (22) réglable par rapport au corps de base (20) pour recevoir un outil (25),
comprenant un moteur à cylindrée variable (24) électrique agissant sur le tiroir de travail (22), et
comprenant un dispositif porteur (106) recevant le groupe mécatronique (10),
**caractérisée en ce que**
le dispositif porteur (106) comprend un agencement d'articulation (110) formé en tant que joint sphérique avec un centre sphérique (114), sur lequel le groupe mécatronique (10) peut être pivoté sur un premier axe (115) et un second axe (116) différent du premier axe (115), sachant que le centre de gravité massique (27) du moteur à cylindrée variable (24) est placé sur le côté du premier axe (115) éloigné de la tête d'outil (18), afin de compenser ainsi au moins partiellement le couple de rotation que le poids (F_{G}) de la tête d'outil (18) déclenche lors d'un pivotement du groupe mécatronique (10) sur le premier axe (115).

2. Machine-outil selon la revendication 1, **caractérisée en ce que** le centre de gravité massique (27) du moteur à cylindrée variable (24) et le centre de gravité massique de la tête d'outil (18) reposent sur le second axe (116).

3. Machine-outil selon la revendication 1 ou 2, **caractérisée en ce que** le groupe mécatronique (10) peut être pivoté sur le centre sphérique (114), sachant que le centre de gravité massique (27) du moteur à cylindrée variable (24) est disposé sur le côté du centre sphérique (114) éloigné de la tête d'outil (18).

4. Machine-outil selon la revendication 2 ou 3, **caractérisée en ce que** l'articulation sphérique (110) présente un corps d'articulation (214) qui est disposé dans un palier d'air ou un palier hydrostatique ou disposé de façon magnétique dans un palier magnétique.

5. Machine-outil selon la revendication 4, **caractérisée en ce que** des moyens pour serrer et/ou bloquer le corps d'articulation (214) sont prévus dans le palier.

6. Machine-outil selon l'une des revendications 1 à 5, **caractérisée en ce que** le groupe mécatronique (10) présente un moteur à axe (14) électrique entraînant la broche de machine (12), qui comprend un rotor (16) présentant de préférence une géométrie d'arbre creux, couplé en rotation avec la broche de machine (12), sachant que le moteur à cylindrée variable (24) a un rotor (26) agissant sur le tiroir de travail (22), et sachant que l'axe de rotation du rotor (30) du moteur à axe (14) et l'axe de rotation du rotor (32) du moteur à cylindrée variable (24) affleurent avec l'axe de rotation (34) de la broche de machine (12).

7. Machine-outil selon la revendication 6, **caractérisée en ce que** la broche de machine (12) est disposée, avec au moins un premier palier rotatif (60) et un second palier rotatif (62) dans un logement (66) formé de préférence en tant que douille, relié fixe en rotation au stator (64) du moteur à axe (14), sachant que le moteur à axe (14) agit sur la broche de machine (12) entre le premier palier rotatif (60) et le second palier rotatif (62).

8. Machine-outil selon la revendication 7, **caractérisée en ce que** le logement (66) présente une section active (68) formée de préférence en tant que crémaillère, pour une unité d'entraînement (112) pour déplacer le groupe mécatronique (10) en direction de l'axe de rotation (34) de la broche de machine (12) et/ou en ce que pour transmettre de l'énergie et des données au logement (66), une bobine primaire (72) est placée, laquelle forme avec une bobine secondaire (74) placée sur une réception (50) pour le moteur à cylindrée variable (24) reliée fixement à la broche de machine (12), un trajet de transmission inductif pour l'énergie et les données.

9. Machine-outil selon l'une des revendications 6 à 8, **caractérisée en ce que** le moteur à cylindrée variable (24) est disposé sur un côté du moteur à axe (14) éloigné de la tête d'outil (18).

10. Machine-outil selon l'une des revendications 6 à 9, **caractérisée en ce que** la broche de machine est formée en tant que broche creuse (12) à travers laquelle se met en prise un arbre d'entraînement (28) couplé en rotation au rotor (26) du moteur à cylindrée variable (24) pour le couplage de mouvement du tiroir de travail (22) et du moteur à cylindrée variable (24).

11. Machine-outil selon la revendication 10, **caractérisée en ce que** le moteur à cylindrée variable (24) agit dans le sens de déplacement (48) sur le tiroir de travail (22), par des moyens de transmission (46) reliés à l'arbre d'entraînement (28).

12. Machine-outil selon la revendication 11, **caractérisée en ce que** les moyens de transmission (46) comprennent un engrenage démultiplicateur (36, 38, 40, 44) disposé dans la tête d'outil (18), qui convertit une rotation de l'arbre d'entraînement (28) en un mouvement linéaire du tiroir de travail (22).

13. Machine-outil selon la revendication 11 ou 12, **caractérisée en ce que** les moyens de transmission comprennent un engrenage démultiplicateur formé de préférence en tant qu'engrenage planétaire ou en tant que réducteur à planétaire convertissant la rotation du rotor (26) du moteur à cylindrée variable (24).

14. Machine-outil selon la revendication 13, **caractérisée en ce que** l'engrenage démultiplicateur est disposé dans la tête d'outil (18) et/ou que l'engrenage démultiplicateur est disposé entre le moteur à cylindrée variable (24) et l'arbre d'entraînement (28).

15. Machine-outil selon l'une des revendications 10 à 14, **caractérisée en ce que** la broche creuse (12) possède une percée (15) formée de préférence en tant que fenêtre, pour un canal fonctionnel (76, 78).

16. Machine-outil selon l'une des revendications 1 à 15, **caractérisée en ce que** le moteur à cylindrée variable (24) est disposé sur une réception (50) fixée sur la broche de machine (12), qui présente un guide rotatif (52) pour un canal fonctionnel (54), lequel débouche de préférence dans un canal fonctionnel (56) passant dans une paroi ou un évidement de la réception (50).

17. Machine-outil selon la revendication 16, **caractérisée en ce que** le stator (58) du moteur à cylindrée variable (24) est disposé fixe par rapport à la broche de machine (12).

18. Machine-outil selon l'une des revendications 1 à 17, **caractérisée en ce que** le groupe mécatronique (10) présente au moins un canal fonctionnel (76) pour du fluide, en particulier un canal fonctionnel pour du réfrigérant lubrifiant et/ou un canal fonctionnel (78) pour des lignes électriques pour la transmission d'énergie et/ou de données pour transmettre une position d'outil dans la tête d'outil (18).

19. Machine-outil selon la revendication 18, **caractérisée en ce que** le canal fonctionnel (76, 78) est une ligne de tuyaux ou une ligne de flexibles montée fixement dans le groupe mécatronique (10), déplacée avec la broche de machine (12) et/ou **en ce que** le canal fonctionnel (76, 78) présente des éléments de couplage (79, 81) pour relier des sections de canal fonctionnel.

20. Machine-outil selon l'une des revendications 10 à 19, **caractérisée en ce que** l'arbre d'entraînement (28) présente au moins un canal fonctionnel pour du fluide, en particulier pour du réfrigérant lubrifiant ou pour des lignes électriques pour la transmission d'énergie et/ou de données.

21. Machine-outil selon la revendication 20, **caractérisée en ce que** l'arbre d'entraînement pour coupler le mouvement du tiroir de travail (22) et du moteur à cylindrée variable (24) est formé en tant qu'arbre creux (28).

22. Machine-outil selon l'une des revendications 1 à 21, **caractérisée en ce que** la tête d'outil (18), pour l'alignement automatique de l'axe de rotation (34) de la broche de machine (12) avec un axe, soit l'axe d'un perçage ou l'axe (81') d'un siège de soupape (102), porte un tenon de guidage (80) qui affleure avec l'axe de rotation (34) de la broche de machine (12) et/ou **en ce qu'**un transmetteur de vitesse (82) détectant la vitesse de la broche de machine (12) est prévu ; et/ou **en ce qu'**un transmetteur de position (84) détectant la position du tiroir de travail (22) est prévu ; et/ou **en ce que** l'agencement d'articulation (110) peut être déplacé horizontalement et/ou verticalement dans le dispositif porteur (106) ; et/ou **en ce qu'**un dispositif de serrage (108) pour recevoir une tête de cylindre (104) est prévu ; et/ou **en ce qu'**un distributeur de tours pour la distribution de fluide pouvant être commandée sur différents canaux fonctionnels, est prévu.

23. Groupe mécatronique (10) pour la réception comprenant un dispositif porteur (106) comprenant un agencement d'articulation (110), dans une machine-outil (100), comprenant une broche de machine (12), comprenant une tête d'outil (18) reçue sur la broche de machine (12), qui présente un corps de base (20) ainsi qu'au moins un tiroir de travail (22) pouvant être déplacé par rapport au corps de base (20), pour recevoir un outil (25), et comprenant un moteur à cylindrée variable (24) électrique avec un rotor (26) agissant sur le tiroir de travail (22),
**caractérisé en ce que**
l'agencement d'articulation (110) est conçu en tant qu'articulation sphérique avec un centre sphérique (114), sachant que la broche de machine (12) est formée en tant que broche creuse, à travers laquelle un arbre d'entraînement (28) couplé en rotation au rotor (26) du moteur à cylindrée variable (24) se met en prise au travers de la broche de machine (12) pour le couplage de mouvement du tiroir de travail (22) et du moteur à cylindrée variable (24) ; et dans lequel
le moteur à cylindrée variable (24) est disposé sur le côté de la broche de machine (12) éloigné de la tête d'outil (18), pour permettre, lors de la réception du groupe mécatronique (10) dans le dispositif porteur (106), que par le positionnement du centre de gravité massique (27) du moteur à cylindrée variable (24) sur le côté du premier axe (115) de l'agencement d'articulation (110) éloigné de la tête d'outil (18), le couple de rotation que le poids (F_{G}) de la tête d'outil (18) déclenche lors d'un pivotement du groupe mécatronique (10) sur le premier axe (115), soit au moins partiellement compensé.

24. Emploi d'un groupe mécatronique (10) reçu dans une machine-outil (100) par un dispositif porteur (106) comprenant un agencement d'articulation (110), comprenant une broche de machine (12), une tête d'outil (18) reçue sur la broche de machine (12), qui présente un corps de base (20) ainsi qu'au moins un tiroir de travail (22) pouvant être déplacé par rapport au corps de base (20) pour la réception d'un outil (25), et un moteur à cylindrée variable (24) électrique agissant sur le tiroir de travail (22),
**caractérisé en ce que**
l'agencement d'articulation (110) est conçu en tant qu'articulation sphérique avec un centre sphérique (114), sachant que le moteur à cylindrée variable (24) est disposé sur le côté de la broche de machine (12) éloigné de la tête d'outil (18), sachant que le centre de gravité massique (27) du moteur à cylindrée variable (24) est positionné sur le côté du premier axe (115) de l'agencement d'articulation (110) éloigné de la tête d'outil (18), pour compenser au moins partiellement le couple de rotation que le poids (F_{G}) de la tête d'outil (18) déclenche lors d'un pivotement du groupe mécatronique (10) sur le premier axe (115).
